# EUROPEAN PATENT APPLICATION

(11) **EP 4 822 190 A1**
(43) Date of publication of application: **14.10.2026**
(21) Application number: 24900345.0
(22) Date of filing: 05.11.2024
(51) Int. Cl.: F15B 11/00, F16K 27/00

(54) **VALVE UNIT**

(30) Priority: 04.12.2023 JP 2023204448
(71) Applicant: KYB Corporation, Minato-ku, Tokyo 105-5128 (JP)
(72) Inventor: FUKUSHIMA, Ryo, Tokyo 105-5128 (JP)
(74) Representative: Grünecker Patent- und Rechtsanwälte PartG mbB
(86) International application number: PCT/JP2024/039204
(87) International publication number: WO 2025/121050

(57) **Abstract**

The valve unit 1 includes: the housing 11; the first actuator port 11a and the second actuator port 11b opening on the outer surface of the housing 11 and connected to the hydraulic motor 4; the tank port 11c opening on the outer surface of the housing 11 and connected to the tank T; the control valve 5 incorporated inside the housing 11, the control valve 5 being configured to control the operation of the hydraulic motor 4; and the quick return valve 7 incorporated inside the housing 11, the quick return valve 7 being configured to return the working oil from the second actuator port 11b to the tank T through the tank port 11c without passing through the control valve 5. The tank port 11c opens on the outer surface of the housing 11 so as to extend across the first section S1 provided with the control valve 5 and the second section S2 provided with the quick return valve 7.

## Description

### TECHNICAL FIELD

The present invention relates to a valve unit.

### BACKGROUND ART

JP2014-9572A discloses a construction machine including a switching valve that is switchable between a first position at which return oil from a hydraulic actuator is returned into a control valve and a second position at which the return oil is directly returned to a tank. JP2013-137062A discloses a hydraulic cylinder circuit of a construction machine in which a quick return valve that allows a flow of oil only during an arm pushing operation is provided in a branch pipeline that directly returns return oil from a bottom-side oil chamber to a tank during the arm pushing operation.

JPS62-169053U discloses a switching device of a hydraulic circuit of a backhoe that is configured such that return oil from a breaker can flow back directly from a switching valve to a working oil tank. JPS61-84754U discloses a hydraulic circuit of a backhoe in which a hydraulic switching valve is connected so as to be in communication with a return path side of a hydraulic actuator, and one branch from the switching valve is directly connected so as to be in communication to a working oil tank through a return oil pipe having a large inner diameter.

### SUMMARY OF INVENTION

When a quick return valve is provided by piping connection between an actuator and a control valve, piping is required between respective components, and in addition, piping is also required between the quick return valve and a tank. On the other hand, the quick return valve is required to quickly discharge working fluid.

The present invention has been made in view of such problems, and an object thereof is to reduce pressure loss of working fluid discharged to a tank while reducing piping.

According to an aspect of the present invention, a valve unit includes: a housing; a first actuator port opening on an outer surface of the housing and connected to an actuator; a second actuator port opening on the outer surface of the housing and connected to the actuator; a tank port opening on the outer surface of the housing and connected to a tank; a control valve incorporated inside the housing, the control valve being configured to control operation of the actuator; and a quick return valve incorporated inside the housing, the quick return valve being configured to return working fluid from the second actuator port to the tank through the tank port without passing through the control valve; wherein the tank port opens on the outer surface of the housing so as to extend across a first section of the housing provided with the control valve and a second section of the housing provided with the quick return valve.

### BRIEF DESCRIPTION OF DRAWINGS

[FIG. 1] FIG. 1 is a schematic configuration diagram of a fluid pressure control device according to an embodiment of the present invention.
[FIG. 2] FIG. 2 is a sectional view of a valve unit along line A-A of FIG. 1.
[FIG. 3] FIG. 3 is a sectional view of the valve unit along line B-B of FIG. 1.
[FIG. 4] FIG. 4 is a sectional view of the valve unit along line C-C of FIG. 3.

### DESCRIPTION OF EMBODIMENTS

An embodiment of the present invention will be described below with reference to the attached drawings.

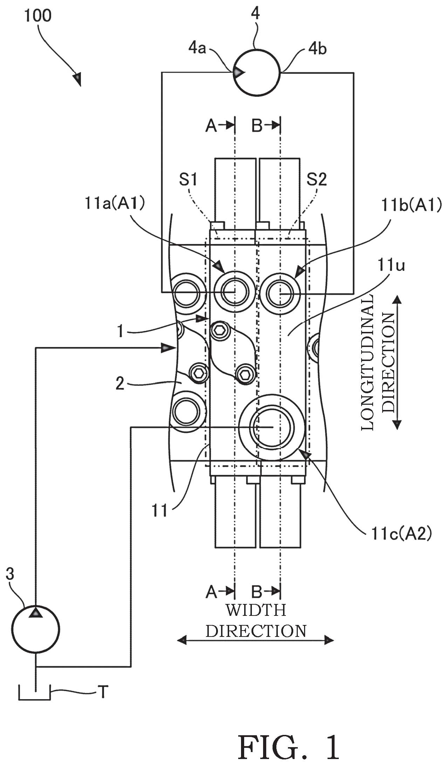

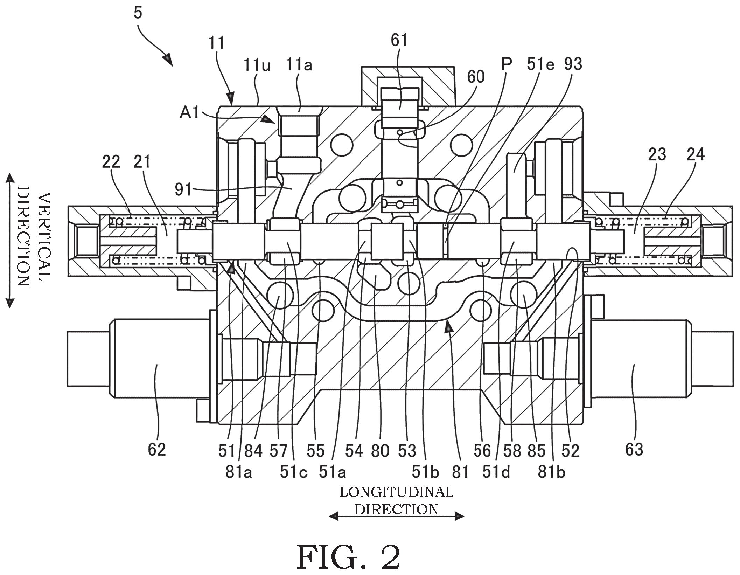

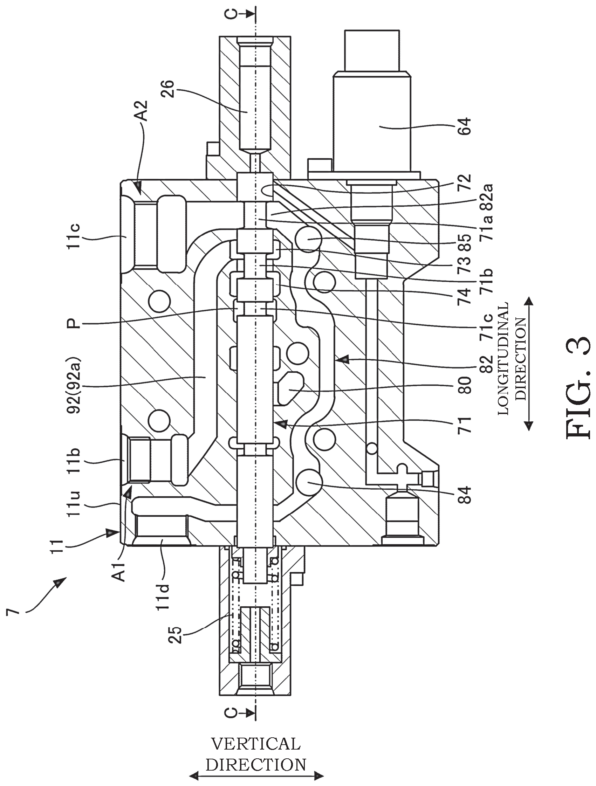

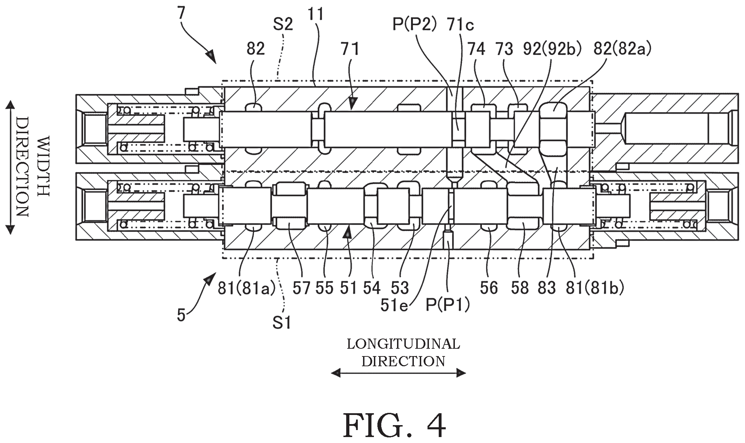

FIG. 1 is a schematic configuration diagram of a fluid pressure control device 100. FIG. 2 is a cross-section along A-A of FIG. 1, FIG. 3 is a cross-section along B-B of FIG. 1, and FIG. 4 is a cross-section along C-C of FIG. 3, each showing a valve unit 1.

The fluid pressure control device 100 shown in FIG. 1 includes: the valve unit 1; a pump 3 serving as a fluid pressure source that supplies working oil to the valve unit 1; and a tank T in which the working oil is stored. The valve unit 1 is mounted on a hydraulic shovel (for example, a backhoe) and controls operation of a hydraulic motor 4 that drives a breaker (not shown) attached as an attachment to the hydraulic shovel. The working oil is working fluid, and incompressible fluid such as water or the like can be used in addition to the working oil as the working fluid. The valve unit 1 can also be used for controlling operation of an actuator such as a hydraulic cylinder or the like other than the hydraulic motor 4, and the valve unit 1 may be used in other construction machines.

The valve unit 1 has a housing 11. A housing 2 of a valve that controls operation of a hydraulic cylinder that drives a boom, an arm, a bucket, and the like of the hydraulic shovel is connected to the housing 11. An integral valve block is constituted by the plurality of housings 2 and 11.

The working oil is supplied from the pump 3 into the valve block. The supplied working oil is then supplied to the respective housings 2 and 11 through oil passages formed in the valve block. Supply and discharge of the working oil to and from the corresponding hydraulic cylinder, the hydraulic motor 4, and the like are controlled by the respective control valves incorporated in the housings 2 and 11.

The housing 11 is a single housing (mono-block) and has a first actuator port 11a, a second actuator port 11b, and a tank port 11c each serving as an opening portion that opens on an outer surface of the housing 11. The first actuator port 11a is connected to a pressurized oil supply port 4a of the hydraulic motor 4 through piping, and the second actuator port 11b is connected to a pressurized oil discharge port 4b of the hydraulic motor 4 through piping.

The working oil guided from the hydraulic motor 4 through the second actuator port 11b into the valve unit 1 is discharged outside the valve unit 1 through the tank port 11c. The tank port 11c is connected to the tank T through piping, and the working oil is returned to the tank T through the tank port 11c. Note that the working oil can be returned from the valve block including the valve unit 1 to the tank T also through a port other than the tank port 11c.

The housing 11 has a first section S1 and a second section S2. The first section S1 is a section in which a control valve 5 (see FIGs. 2 and 4), which will be described later, is provided, and the first actuator port 11a is disposed in the first section S1. The second section S2 is a section in which a quick return valve 7 (see FIGs. 3 and 4), which will be described later, is provided, and the second actuator port 11b is disposed in the second section S2. As described above, in the valve unit 1, two valves, i.e., the control valve 5 and the quick return valve 7, are incorporated in the single housing 11.

The first actuator port 11a and the second actuator port 11b are disposed side by side in the width direction of the housing 11, and the first section S1 and the second section S2 are defined so as to divide the housing 11 into two in the width direction. The widths of the first and second sections S1 and S2 are respectively set in accordance with the outer diameters of the first and second actuator ports 11a and 11b, and are slightly larger than the respective outer diameters of the first and second actuator ports 11a and 11b. A boundary between the first section S1 and the second section S2 is located at the center (the center in the width direction) between a spool valve 51 (see FIG. 4) of the control valve 5, which will be described later, and a spool valve 71 (see FIG. 4) of the quick return valve 7, which will be described later. The first actuator port 11a, the second actuator port 11b, and the tank port 11c all open on an upper surface 11u (a surface on the one side in the vertical direction; see FIG. 2) which is the outer surface of the housing 11. In other words, the first actuator port 11a, the second actuator port 11b, and the tank port 11c are formed on a common surface of the housing 11.

In a breaker (not shown), rotation of the hydraulic motor 4 is converted into reciprocating motion of a bit (not shown) that crushes a paved road surface and the like. The bit is pushed back by reaction during crushing, and at this time, a flow rate of the working oil discharged from the hydraulic motor 4 and returned to the tank T becomes large. For this reason, in order to achieve smooth operation of the breaker, in the valve unit 1, it is desired to quickly discharge the working oil from the hydraulic motor 4 in order to cope with the large return flow rate.

In the valve unit 1, the tank port 11c opens on the upper surface 11u of the housing 11 so as to extend across the first section S1 and the second section S2. By providing the tank port 11c that extends across both the first section S1 and the second section S2, the tank port 11c can be made large while achieving size reduction of the housing 11, and the pressure loss of the working oil discharged to the tank T can be reduced. The tank port 11c is set so as to be larger than the second actuator port 11b, and the first actuator port 11a and the second actuator port 11b are set so as to have the same size as each other.

The tank port 11c is disposed offset toward the second section S2 in the width direction of the housing 11, and is provided so as to protrude from the second section S2 to the first section S1. By disposing the tank port 11c so as to be offset toward the second section S2, the tank port 11c can be disposed closer to the second actuator port 11b compared to a case in which the tank port 11c is disposed offset toward the first section S1. Therefore, a distance between the second actuator port 11b and the tank port 11c can be shortened, and the pressure loss of the working oil guided from the second actuator port 11b to the tank port 11c can be reduced.

The first actuator port 11a and the second actuator port 11b each have an installation portion A1 that includes a counterbore portion and a female screw portion and to which a joint (not shown) is assembled, and each open at the upper surface 11u of the housing 11 through the installation portion A1. The tank port 11c has an installation portion A2 that includes a counterbore portion and a female screw portion and to which a joint (not shown) is assembled, and opens at the upper surface 11u of the housing 11 through the installation portion A2.

On the upper surface 11u of the housing 11 which is the common surface, the first actuator port 11a and the second actuator port 11b are provided on the first side in the longitudinal direction relative to the tank port 11c. The tank port 11c is provided on the second side (the lower side in FIG. 1) of the housing 11 in the longitudinal direction. The first actuator port 11a and the second actuator port 11b are provided on the first side (the upper side in FIG. 1) in the longitudinal direction (the horizontal direction relative to the vertical direction) of the housing 11. By providing the first actuator port 11a and the second actuator port 11b toward the first side in the longitudinal direction on the upper surface 11u of the housing 11, for example, compared to a case in which the second actuator port 11b is provided so as to be arranged side by side with the first actuator port 11a along the longitudinal direction and arranged side by side with the tank port 11c along the width direction, an installation space for the tank port 11c can be secured toward the second side in the longitudinal direction on the upper surface 11u. Therefore, while suppressing size increase of the housing 11, the tank port 11c that is provided toward the second side in the longitudinal direction can be made large.

The first actuator port 11a, the second actuator port 11b, and the tank port 11c may open on an outer surface other than the upper surface 11u of the housing 11, and may also open on surfaces different from each other. Even in this case, by providing the tank port 11c that opens on the outer surface of the housing 11 so as to extend across the first section S1 and the second section S2, it is possible to make the tank port 11c larger.

On the upper surface 11u of the housing 11 which is the common surface, only one of the first actuator port 11a and the second actuator port 11b may be provided on the first side (the upper side in FIG. 1) of the housing 11 in the longitudinal direction.

In a case in which the first actuator port 11a is provided on the first side in the longitudinal direction, it is possible to suppress the size expansion of the housing 11 by providing the second actuator port 11b, which is adjacent to the tank port 11c from the first side (the upper side in FIG. 1) in the longitudinal direction, on the second side (the lower side in FIG. 1) in the longitudinal direction, or by providing the second actuator port 11b near the center in the longitudinal direction. In addition, in a case in which the second actuator port 11b is provided on the first side in the longitudinal direction, by providing the first actuator port 11a diagonally adjacent (from the upper left in FIG. 1) to the tank port 11c on the upper surface 11u of the housing 11 on the second side (the lower side in FIG. 1) in the longitudinal direction, or by providing the first actuator port 11a near the center in the longitudinal direction, it is possible to suppress the size increase of the housing 11 as much as possible compared to a case in which the second actuator port 11b, which is arranged side by side with the first actuator port 11a along the longitudinal direction and is arranged side by side with the tank port 11c along the width direction, is provided. The first actuator port 11a can be provided near the center in the longitudinal direction in the first section S1 by offsetting a compensator valve 61 (see FIG. 2), which will be described later.

For example, a hydraulic cylinder may be connected to the valve unit 1 as an actuator instead of the hydraulic motor 4. In this case, the first actuator port 11a and the second actuator port 11b each constitutes a supply/discharge port that supplies and discharges the working oil to and from the hydraulic cylinder, and when one of the first actuator port 11a and the second actuator port 11b supplies the working oil to the hydraulic cylinder, the other discharges the working oil from the hydraulic cylinder.

As shown in FIG. 2, the valve unit 1 has the control valve 5 that is incorporated inside the housing 11. The control valve 5 is a spare valve in the integral valve block of the fluid pressure control device 100, and controls operation of the hydraulic motor 4 (see FIG. 1) that drives the breaker attached to the hydraulic shovel as an attachment.

The control valve 5 has the spool valve 51 serving as a control spool whose position is switched among a plurality of switched positions, and an accommodating hole 52 that slidably accommodates the spool valve 51. The control valve 5 has three switched positions as the plurality of switched positions: a neutral position (the state shown in FIG. 2) at which the spool valve 51 is in a neutral state; and a first position at which the spool valve 51 is positioned on the second side (the right side in FIG. 2) in the longitudinal direction relative to the neutral position; and a second position at which the spool valve 51 is positioned on the first side (the left side in FIG. 2) in the longitudinal direction relative to the neutral position. The first position is a supply position at which the working oil is supplied to the hydraulic motor 4.

The spool valve 51 extends in the longitudinal direction of the housing 11. Therefore, the longitudinal direction of the housing 11 can be described as the direction in which the spool valve 51 extends. The accommodating hole 52 is formed with: an annular recessed portion 53 that is provided at the center; a pump port 54 that is provided adjacent to the annular recessed portion 53; supply ports 55 and 56 that are provided on respective outer sides of the annular recessed portion 53 and the pump port 54; actuation ports 57 and 58 that are provided on respective outer sides of the supply ports 55 and 56; discharge ports 81a and 81b that are provided on respective outer sides of the actuation ports 57 and 58; and a first tank passage 81 that communicates with the discharge ports 81a and 81b. In this embodiment, the discharge ports 81a and 81b are formed by the first tank passage 81.

The pump port 54 is connected to the pump 3 (see FIG. 1) through a pump passage 80 extending in the width direction (the left-right direction in FIG. 1) of the housing 11. The working oil discharged from the pump 3 is constantly guided to the pump port 54.

The first tank passage 81 is formed in the first section S1 (see FIGs. 1 and 4) of the housing 11. The discharge port 81a is provided on the first side (the left side in FIG. 2) in the longitudinal direction so as to be adjacent to the actuation port 57, and the discharge port 81b is provided on the second side (the right side in FIG. 2) in the longitudinal direction so as to be adjacent to the actuation port 58.

The first tank passage 81 is formed such that portions thereof extend respectively from the discharge ports 81a and 81b in the directions away from the spool valve 51 (toward the lower side in FIG. 2), and then extend substantially parallel to the spool valve 51 toward the inner side of the housing 11 and connect to each other. A fourth tank passage 84 and a fifth tank passage 85 extending in the width direction (see FIG. 1) communicate with the first tank passage 81, and the first tank passage 81 is connected to the tank T (see FIG. 1) through the fourth tank passage 84 and the fifth tank passage 85. The fourth tank passage 84 and the fifth tank passage 85 are formed in the housing 11 as part of a common tank passage for a plurality of control valves and the like arranged in the width direction in the integral valve block of the fluid pressure control device 100 (see FIG. 1). In addition to these components, a second tank passage 82 (see FIG. 3) and a third tank passage 83 (see FIG. 4), which will be described later, are also formed in the housing 11. The first to fifth tank passages 81 to 85 correspond to tank passages.

A first internal flow path 91 that communicates the actuation port 57 and the first actuator port 11a is formed in the housing 11. The first internal flow path 91 is disposed on the first side in the longitudinal direction together with the first actuator port 11a and the actuation port 57. The first actuator port 11a and the actuation port 57 overlap with each other when viewed in the vertical direction (when viewed in the up-down direction in FIG. 2), and the first internal flow path 91 extends substantially vertically (upward in FIG. 2) from the actuation port 57 and connects to the first actuator port 11a. Therefore, the actuation port 57 is connected to the pressurized oil supply port 4a (see FIG. 1) of the hydraulic motor 4 through the first internal flow path 91 and the first actuator port 11a.

In a state in which the spool valve 51 is positioned at the neutral position shown in FIG. 2, the spool valve 51 has: a first annular groove 51a that is formed at a position facing the pump port 54; a second annular groove 51b that is formed at a position facing the annular recessed portion 53; a third annular groove 51c that is formed at a position facing the actuation port 57; a fourth annular groove 51d that is formed at a position facing the actuation port 58; and a fifth annular groove 51e that is formed at a position facing a signal pressure passage P, which will be described later. A first pilot chamber 21 and a centering spring 22 are provided at a first end of the spool valve 51, and a second pilot chamber 23 and a centering spring 24 are provided at a second end of the spool valve 51. Pilot pressure is supplied to the first pilot chamber 21 through a first solenoid 62, and pilot pressure is supplied to the second pilot chamber 23 through a second solenoid 63. When the spool valve 51 is positioned at the neutral position, the actuation ports 57 and 58 are blocked from the supply ports 55 and 56 and the discharge ports 81a and 81b by the spool valve 51.

The control valve 5 further has a valve accommodating hole 60 that is formed perpendicular to the accommodating hole 52, and the compensator valve 61 that is slidably accommodated in the valve accommodating hole 60. The annular recessed portion 53 and the supply ports 55 and 56 communicate with each other through the compensator valve 61, and an opening degree for communicating these is changed in accordance with the pressure of the working oil acting on the compensator valve 61.

When the pilot pressure is guided to the first pilot chamber 21 and the spool valve 51 moves to the second side (the right side in FIG. 2) in the longitudinal direction to reach the first position, the pump port 54 and the annular recessed portion 53 communicate through the first annular groove 51a and a notch (not shown) communicating with the first annular groove 51a, and the working oil is guided to the supply ports 55 and 56. The working oil guided to the supply port 55 is supplied to the pressurized oil supply port 4a of the hydraulic motor 4 (see FIG. 1) by passing through the actuation port 57, which communicates with the supply port 55 through the third annular groove 51c, and through the first internal flow path 91 and the first actuator port 11a. The working oil supplied to the hydraulic motor 4 is thereafter guided from the pressurized oil discharge port 4b of the hydraulic motor 4 to the second actuator port 11b (see FIGs. 1 and 3).

As shown in FIG. 3, the valve unit 1 has the quick return valve 7. The quick return valve 7 is incorporated inside the housing 11 and is disposed side by side with the control valve 5 in the width direction of the housing 11 (see FIG. 4). Therefore, the width direction can also be described as, in other words, the direction in which the control valve 5 and the quick return valve 7 are arranged side by side.

The quick return valve 7 has the spool valve 71 serving as a quick return spool whose position is switched among a plurality of switched positions, and an accommodating hole 72 that slidably accommodates the spool valve 71. The quick return valve 7 has two switched positions as the plurality of switched positions: a neutral position (a state shown in FIG. 3) at which the spool valve 71 is in a neutral state, and a discharge position at which the spool valve 71 is positioned on the first side (the left side in FIG. 3) in the longitudinal direction relative to the neutral position. Similarly to the spool valve 51, the spool valve 71 extends along the longitudinal direction of the housing 11.

The accommodating hole 72 is formed with: a first connection port 73; a second connection port 74 adjacent to the first connection port 73 from the first side (the left side in FIG. 3) in the longitudinal direction; a discharge port 82a adjacent to the first connection port 73 from the second side (the right side in FIG. 3) in the longitudinal direction; and a second tank passage 82 that communicates with the discharge port 82a. In this embodiment, the discharge port 82a is formed by the second tank passage 82. The first connection port 73, the second connection port 74, and the discharge port 82a are all provided on the second side (the right side in FIG. 3) in the longitudinal direction.

The second tank passage 82 is formed in the second section S2 (see FIGs. 1 and 4) of the housing 11. The discharge port 82a overlaps with the tank port 11c when viewed in the vertical direction (when viewed in the up-down direction in FIG. 3), and the second tank passage 82 extends substantially vertically (upward in FIG. 3) from the discharge port 82a and communicates with the tank port 11c.

The second tank passage 82 extends from the discharge port 82a in the direction away from the spool valve 71 (downward in FIG. 3), then extends substantially parallel to the spool valve 71 toward the first side (the left side in FIG. 3) in the longitudinal direction, and further extends substantially perpendicular to the spool valve 71 toward the spool valve 71 (upward in FIG. 3), passes around the spool valve 71, and then connects to a tank port 11d that opens on a first side surface (a left side surface in FIG. 3) of the housing 11. The tank port 11d will be described later.

The fourth tank passage 84 and the fifth tank passage 85 communicate with the second tank passage 82, and the second tank passage 82 is connected to the tank T (see FIG. 1) through the fourth tank passage 84 and the fifth tank passage 85. In other words, similarly to the control valve 5, the quick return valve 7 is also connected to the common tank passage formed in the fluid pressure control device 100 (see FIG. 1). For this reason, the second tank passage 82 also communicates with the first tank passage 81 through the fourth tank passage 84 and the fifth tank passage 85.

A second internal flow path 92 (see FIGs. 3 and 4) that provides communication between the second actuator port 11b and the actuation port 58 (see FIG. 2) of the control valve 5 is formed in the housing 11. The second internal flow path 92 connects the second actuator port 11b and the actuation port 58 of the control valve 5 through the first connection port 73 of the quick return valve 7.

In a state in which the spool valve 71 is positioned at the neutral position as shown in FIG. 3, the spool valve 71 has a first annular groove 71a that is formed at a position facing the discharge port 82a, a second annular groove 71b that communicates the first connection port 73 and the second connection port 74, and a third annular groove 71c that is formed at a position facing the signal pressure passage P. A centering spring 25 is provided at a first end (the left side in FIG. 3) of the spool valve 71, and a pilot chamber 26 is provided at a second end (the right side in FIG. 3) of the spool valve 71. Pilot pressure is supplied to the pilot chamber 26 through a solenoid 64.

When the pilot pressure is guided to the pilot chamber 26 and the spool valve 71 moves to the first side (the left side in FIG. 3) in the longitudinal direction to reach the discharge position, the first connection port 73 and the discharge port 82a communicate with each other through the first annular groove 71a, and the first connection port 73 and the second connection port 74 are blocked. Therefore, when the quick return valve 7 is positioned at the discharge position, the working oil guided from the hydraulic motor 4 (see FIG. 1) through the second actuator port 11b to the second internal flow path 92 is discharged from the tank port 11c through the first connection port 73 and the second tank passage 82.

As described above, the quick return valve 7 can return the working oil from the second actuator port 11b to the tank T (see FIG. 1) through the tank port 11c without passing through the control valve 5, and thereby pressure loss can be reduced. The first connection port 73 serves as a second port and is brought into communication with or blocked from the discharge port 82a by the spool valve 71.

A switched position of the quick return valve 7 can be switched by a switching operation by a user using an operation unit such as a switch or the like. The quick return valve 7 may be switched, for example, in conjunction with the switching operation of the control valve 5. By switching the quick return valve 7 from the neutral position to the discharge position in accordance with switching of the control valve 5 from the neutral position to the first position, when the control valve 5 supplies the working oil to the hydraulic motor 4 through the first actuator port 11a, the working oil can be discharged from the tank port 11c through the quick return valve 7. In addition, by switching the quick return valve 7 from the discharge position to the neutral position in accordance with switching of the control valve 5 from the first position to the neutral position, when the control valve 5 stops supply of the working oil, the quick return valve 7 can be returned to the neutral position.

The second internal flow path 92 has a first partial flow path 92a that connects the second actuator port 11b and the first connection port 73, and a second partial flow path 92b (see FIG. 4) that connects the second connection port 74 of the quick return valve 7 and the actuation port 58 of the control valve 5.

The first partial flow path 92a extends from the second actuator port 11b toward the spool valve 71, then extends substantially parallel to the spool valve 71, and further extends toward the spool valve 71 and connects to the first connection port 73. The first partial flow path 92a overlaps with the spool valve 71 when viewed in the vertical direction (when viewed in the up-down direction in FIG. 3).

As shown in FIG. 4, the second partial flow path 92b extends from the second connection port 74 toward the actuation port 58 in an inclined manner relative to the spool valve 71 (to a lower right in FIG. 4) and connects to the actuation port 58. The second partial flow path 92b overlaps with the spool valve 51 of the control valve 5 and the spool valve 71 of the quick return valve 7 when viewed in the width direction (when viewed in the up-down direction in FIG. 4).

When the quick return valve 7 is positioned at the neutral position as shown in FIG. 3, the spool valve 71 causes the first connection port 73 and the second connection port 74 to communicate with each other through the second annular groove 71b and causes the first connection port 73 and the discharge port 82a to be blocked. Therefore, when the switched position of the quick return valve 7 is the neutral position, the working oil from the second actuator port 11b is guided to the actuation port 58 of the control valve 5 through the second internal flow path 92. In addition, when the control valve 5 shown in FIG. 2 is positioned at the first position at which the spool valve 51 has moved to the second side (the right side in FIG. 2) in the longitudinal direction, the actuation port 58 and the discharge port 81b communicate with each other through the fourth annular groove 51d.

For this reason, when the switched position of the quick return valve 7 is the neutral position, the working oil from the second actuator port 11b can also be returned to the tank T (see FIG. 1) through the control valve 5. Thereby, it also becomes possible to provide an option of not using the quick return valve 7.

The actuation port 58 is brought into communication with and blocked from the discharge port 81b of the first tank passage 81 by the spool valve 51. The actuation port 58 is blocked from the supply port 56 for the working oil in the state in which the actuation port 58 is in communication with the discharge port 81b of the first tank passage 81, and the actuation port 58 is blocked from the discharge port 81b of the first tank passage 81 in the state in which the actuation port 58 is in communication with the supply port 56. Therefore, the second actuator port 11b that communicates with the actuation port 58 through the second internal flow path 92 can also function as the supply/discharge port. The actuation port 58 serves as a first port.

As shown in FIG. 4, the discharge port 81b of the first tank passage 81 and the discharge port 82a of the second tank passage 82 communicate with each other through the third tank passage 83. For this reason, when the working oil is discharged from the control valve 5 through the discharge port 81b of the first tank passage 81, the working oil can also be easily discharged from the tank port 11c through the third tank passage 83. Thereby, pressure loss can also be reduced by using the tank port 11c even in the control valve 5.

The discharge port 82a of the second tank passage 82 is set so as to have a dimension along the longitudinal direction (a dimension in the left-right direction in FIG. 4) larger than that of the discharge port 81b of the first tank passage 81. With such a configuration, it is possible to reduce pressure loss when the working oil is discharged through the discharge port 82a of the second tank passage 82 compared to a case in which the working oil is discharged through the discharge port 81b of the first tank passage 81.

Because the tank port 11d shown in FIG. 3 is provided on the first side in the longitudinal direction, it is possible to quickly discharge the working oil close to the tank port 11d relative to the tank port 11c provided on the second side in the longitudinal direction. On the other hand, the quick return valve 7 is required to quickly discharge the working oil in order to cope with the large flow rate of the working oil returned from the hydraulic motor 4. Accordingly, the working oil discharged through the discharge port 82a of the second tank passage 82 is mainly discharged from the tank port 11c, which is provided on the second side in the longitudinal direction together with the discharge port 82a. Because the tank port 11c is set to have a cross-sectional area larger than that of the tank port 11d, pressure loss of the working oil discharged through the tank port 11c is reduced compared to a case in which the working oil is discharged through the tank port 11d, or compared to a case in which a tank port having the same size as the tank port 11d is provided instead of the tank port 11c.

When, for example, the hydraulic cylinder is applied as an actuator instead of the hydraulic motor 4 (see FIG. 1), when the control valve 5 is set to the first position in a state in which the quick return valve 7 is positioned at the neutral position, the first actuator port 11a functions as a supply port of the working oil to the hydraulic cylinder, and the second actuator port 11b functions as a discharge port of the working oil from the hydraulic cylinder. Therefore, also in this case, the working oil from the second actuator port 11b is discharged through the discharge port 81b of the first tank passage 81. In addition, in this case, by switching the quick return valve 7 to the discharge position, the working oil discharged from the hydraulic cylinder can also be discharged from the tank port 11c through the quick return valve 7.

When the hydraulic cylinder is applied as an actuator, when the control valve 5 is set to the second position in a state in which the quick return valve 7 is positioned at the neutral position, the first actuator port 11a functions as a discharge port, and the second actuator port 11b functions as a supply port. At the second position, the working oil is controlled as follows.

In other words, when the pilot pressure is guided to the second pilot chamber 23 and the spool valve 51 moves to the second position on the first side (the left side in FIG. 2) in the longitudinal direction, the pump port 54 and the annular recessed portion 53 communicate with each other through the second annular groove 51b and a notch (not shown) communicating with the second annular groove 51b, and the working oil is guided to the supply ports 55 and 56. The working oil guided to the supply port 56 is supplied to the hydraulic cylinder by passing through the actuation port 58, which communicates with the supply port 56 through the fourth annular groove 51d, and through the second partial flow path 92b, the second connection port 74, the first connection port 73, the first partial flow path 92a, and the second actuator port 11b (see FIGs. 3 and 4). In addition, the working oil is guided from the hydraulic cylinder to the first actuator port 11a, and is guided to the first tank passage 81 through the first internal flow path 91, the actuation port 57, and the third annular groove 51c.

Note that a relief valve (not shown) can be provided on both side surfaces (the left and right side surfaces in FIG. 2) of the housing 11, and the relief valve that is provided on the left side surface in FIG. 2 can open when the hydraulic pressure of the first internal flow path 91 is equal to or greater than a set pressure, and can communicate the first internal flow path 91 and the first tank passage 81, which extends from the discharge port 81a in the direction away from the spool valve 51 (upward in FIG. 2). In addition, the relief valve that is provided on the right side surface in FIG. 2 can open when the hydraulic pressure of a third internal flow path 93, which extends substantially vertically (upward in FIG. 2) from the actuation port 58, is equal to or greater than a set pressure, and can communicate the third internal flow path 93 and the first tank passage 81, which extends from the discharge port 81b in the direction away from the spool valve 51 (the upper side in FIG. 2).

As shown in FIG. 4, the valve unit 1 further includes the signal pressure passage P that is formed in the housing 11, provided so as to cross the spool valve 71 of the quick return valve 7, and brought into a communicating state and a blocked state by the spool valve 51 of the control valve 5 in accordance with a switched position of the control valve 5. The signal pressure passage P extends in the width direction and opens on one end surface (a lower surface in FIG. 4) and another end surface (an upper surface in FIG. 4) of the housing 11. The signal pressure passage P is provided for detecting the neutral position of the control valve 5, becomes a communicating state through the fifth annular groove 51e of the control valve 5 and the third annular groove 71c of the quick return valve 7 when the control valve 5 and the quick return valve 7 are at the neutral positions shown in FIG. 4, and becomes a blocked state by the spool valve 51 when the control valve 5 is switched from the neutral position to the first position or the second position.

The signal pressure passage P has a first partial passage P1 that communicates with the fifth annular groove 51e without crossing the spool valve 71, and a second partial passage P2 that communicates with the fifth annular groove 51e while crossing the spool valve 71. The first partial passage P1 communicates with the fifth annular groove 51e from the side opposite to the side of the quick return valve 7 (the lower side in FIG. 4), and the second partial passage P2 communicates with the fifth annular groove 51e from the side of the quick return valve 7 (the upper side in FIG. 4).

When the control valve 5 is positioned at the neutral position, the first partial passage P1 and the second partial passage P2 communicate with the fifth annular groove 51e in a state in which they are offset from each other to opposite sides of the center of the fifth annular groove 51e in the longitudinal direction. The first partial passage P1 is offset to the left side in FIG. 4 from the center of the fifth annular groove 51e, and the second partial passage P2 is offset to the right side in FIG. 4 from the center of the fifth annular groove 51e. The first partial passage P1 is provided between the annular recessed portion 53 and the supply port 56 in the longitudinal direction, and the second partial passage P2 is provided adjacent to the second connection port 74 from the first side in the longitudinal direction.

When the spool valve 51 moves to the left side in FIG. 4, the second partial passage P2 on the upper side in FIG. 4 is blocked from the fifth annular groove 51e by the spool valve 71 before the first partial passage P1 on the lower side in FIG. 4 is blocked. In addition, when the spool valve 51 moves to the right side in FIG. 4, the first partial passage P1 on the lower side in FIG. 4 is blocked from the fifth annular groove 51e by the spool valve 71 before the second partial passage P2 on the upper side in FIG. 4 is blocked. Therefore, a moved amount of the spool valve 51 for blocking the signal pressure passage P can be equalized between a case in which the spool valve 51 is moved to the first side in the longitudinal direction from the neutral position and a case in which the spool valve 51 is moved to the second side from the neutral position.

The third annular groove 71c of the spool valve 71 is a signal pressure annular groove, and a groove width of the third annular groove 71c (a width in the left-right direction in FIG. 4) is set to a size that maintains the second partial passage P2 in a communicating state both when the spool valve 71 is positioned at the neutral position and when the spool valve 71 is positioned at the discharge position. In other words, the third annular groove 71c communicates with the signal pressure passage P regardless of the switched position of the quick return valve 7. With such a configuration, even if the spool valve 71 is provided so as to cross the signal pressure passage P, the switched position of the control valve 5 can be detected, and so it is not necessary to provide the spool valve 71 so as to avoid the signal pressure passage P, and layout flexibility of the spool valve 71 and the signal pressure passage P is improved.

The configurations, operations, and effects of the embodiment of the present invention will be collectively described below.

The valve unit 1 includes: the housing 11; the first actuator port 11a opening on the outer surface of the housing 11 and connected to the hydraulic motor 4 serving as an example of the actuator; the second actuator port 11b opening on the outer surface of the housing 11 and connected to the hydraulic motor 4; the tank port 11c opening on the outer surface of the housing 11 and connected to the tank T; the control valve 5 incorporated inside the housing 11, the control valve 5 being configured to control operation of the hydraulic motor 4; and the quick return valve 7 incorporated inside the housing 11, the quick return valve 7 being configured to return the working oil from the second actuator port 11b to the tank T through the tank port 11c without passing through the control valve 5. The tank port 11c opens on the outer surface of the housing 11 so as to extend across the first section S1 of the housing 11 provided with the control valve 5 and the second section S2 of the housing 11 provided with the quick return valve 7.

According to such a configuration, because the control valve 5 and the quick return valve 7 are provided in the housing 11 which is a single housing (mono-block), it is possible to eliminate the need for piping and the like between the control valve 5 and the quick return valve 7. In addition, because the tank port 11c extends across both the section of the control valve 5 and the section of the quick return valve 7, the tank port 11c can be made large while achieving size reduction of the housing 11, and the pressure loss of the working fluid discharged to the tank T can be reduced.

The first actuator port 11a, the second actuator port 11b, and the tank port 11c are formed on the upper surface 11u of the housing 11 that is the common surface. The first actuator port 11a is provided in the first section S1, and the second actuator port 11b is provided in the second section S2. The first actuator port 11a and the second actuator port 11b are provided on the first side of the housing 11 in the longitudinal direction, and the tank port 11c is provided on the second side of the housing 11 in the longitudinal direction. At least one of the first actuator port 11a and the second actuator port 11b may be provided on the first side of the housing 11 in the longitudinal direction.

According to such a configuration, because the space can be secured on the second side of the housing 11 in the longitudinal direction to provide the tank port 11c, the tank port 11c can be made large while suppressing size increase of the housing 11.

The first actuator port 11a and the second actuator port 11b are provided on the first side of the housing 11 in the longitudinal direction relative to the tank port 11c. The valve unit 1 further includes the first to fifth tank passages 81 to 85 serving as the tank passages formed in the housing 11 and communicating with the tank port 11c. The control valve 5 has: the spool valve 51 serving as the control spool; the supply port 56 for the working oil; and the actuation port 58 (the first port) provided on the second side in the longitudinal direction, the actuation port 58 being configured to be, by the spool valve 51, blocked from the first tank passage 81 in a state in which the actuation port 58 is communicating with the supply port 56, and blocked from the supply port 56 in a state in which the actuation port 58 is communicating with the first tank passage 81. The quick return valve 7 has: the spool valve 71 serving as the quick return spool; and the first connection port 73 (the second port) provided on the second side in the longitudinal direction, the first connection port 73 being brought into communication with or blocked from the second tank passage 82 by the spool valve 71. The housing 11 has the second internal flow path 92 configured to connect, through the first connection port 73, the second actuator port 11b provided on the first side in the longitudinal direction relative to the tank port 11c and the actuation port 58 provided on the second side.

According to such a configuration, when the tank port 11c is provided on the second side in the longitudinal direction, even if the first actuator port 11a and the second actuator port 11b are provided on the first side in the longitudinal direction relative to the tank port 11c, as described above, by providing the second internal flow path 92 extending from the first side in the longitudinal direction relative to the tank port 11c to the second side in the longitudinal direction, it is possible to connect the second actuator port 11b to the tank port 11c through the quick return valve 7 and the control valve 5. In addition, because the actuation port 58 is brought into communication with or blocked from the supply port 56, depending on the actuator to be applied, the second actuator port 11b can also be used as the supply/discharge port of the working oil.

The valve unit 1 further includes the signal pressure passage P formed in the housing 11 and provided so as to cross the spool valve 71, the signal pressure passage P being configured to be brought into a communicating state or a blocked state by the spool valve 51 in accordance with the switched position of the control valve 5. The spool valve 71 includes the third annular groove 71c serving as the signal pressure annular groove configured to be communicated with the signal pressure passage P regardless of the switched position of the quick return valve 7.

According to such a configuration, even if the spool valve 71 is provided so as to cross the signal pressure passage P, because the third annular groove 71c of the spool valve 71 does not block the signal pressure passage P, the switched position of the control valve 5 can be detected. Therefore, it is not necessary to provide the spool valve 71 so as to avoid the signal pressure passage P, and the layout flexibility of the spool valve 71 and the signal pressure passage P is improved.

Embodiments of this invention were described above, but the above embodiments are merely examples of applications of this invention, and the technical scope of this invention is not limited to the specific constitutions of the above embodiments.

The present application claims priority based on Japanese Patent Application No. 2023-204448 filed with the Japan Patent Office on December 4, 2023, and the entire contents of which are incorporated herein by reference.

## Claims

1. A valve unit comprising:
a housing;
a first actuator port opening on an outer surface of the housing and connected to an actuator;
a second actuator port opening on the outer surface of the housing and connected to the actuator;
a tank port opening on the outer surface of the housing and connected to a tank;
a control valve incorporated inside the housing, the control valve being configured to control operation of the actuator; and
a quick return valve incorporated inside the housing, the quick return valve being configured to return working fluid from the second actuator port to the tank through the tank port without passing through the control valve; wherein
the tank port opens on the outer surface of the housing so as to extend across a first section of the housing provided with the control valve and a second section of the housing provided with the quick return valve.

2. The valve unit according to Claim 1, wherein
the first actuator port, the second actuator port, and the tank port are formed on a common surface of the housing,
the first actuator port is provided in the first section,
the second actuator port is provided in the second section, and
at least one of the first actuator port and the second actuator port is provided on a first side of the housing in a longitudinal direction, and the tank port is provided on a second side of the housing in the longitudinal direction.

3. The valve unit according to Claim 2, wherein
the first actuator port and the second actuator port are provided on the first side in the longitudinal direction relative to the tank port,
the valve unit further comprising a tank passage formed in the housing, the tank passage communicating with the tank port,
the control valve has:
a control spool;
a supply port for working fluid; and
a first port provided on the second side in the longitudinal direction, the first port being configured to be, by the control spool, blocked from the tank passage in a state in which the first port is communicating with the supply port and blocked from the supply port in a state in which the first port is communicating with the tank passage,
the quick return valve has:
a quick return spool; and
a second port provided on the second side in the longitudinal direction, the second port being brought into communication with the tank passage or blocked from the tank passage by the quick return spool, and
the housing has an internal flow path configured to connect, through the second port, the second actuator port provided on the first side in the longitudinal direction relative to the tank port and the first port provided on the second side in the longitudinal direction.

4. The valve unit according to Claim 1, further comprising
a signal pressure passage formed in the housing and provided so as to cross a quick return spool of the quick return valve, the signal pressure passage being configured to be brought into a communicating state or a blocked state by a control spool of the control valve in accordance with a switched position of the control valve, wherein
the quick return spool is provided with a signal pressure annular groove configured to be communicated with the signal pressure passage regardless of a switched position of the quick return valve.
